# EUROPÄISCHE PATENTANMELDUNG

(11) **EP 2 811 124 A1**
(43) Veröffentlichungstag der Anmeldung: **10.12.2014**
(21) Anmeldenummer: 14167113.1
(22) Anmeldetag: 06.05.2014
(51) Int. Cl.: F01K 3/06, F01K 7/22, F01K 7/40, F01K 23/02, F01K 3/00

(54) **Energiespeichervorrichtung zur Vorwärmung von Speisewasser**

(30) Priorität: 05.06.2013 DE 102013210430
(71) Anmelder: Siemens Aktiengesellschaft, 80333 München (DE)
(72) Erfinder: Graeber, Carsten, 91056 Erlangen (DE); Brunhuber, Christian, 91275 Auerbach (DE); Zimmermann, Gerhard, 91315 Höchstadt/Aisch (DE)

(57) **Zusammenfassung**

Die Erfindung betrifft eine Energiespeichervorrichtung (1) zur Speicherung thermischer Energie, mit einem Ladekreislauf (2), umfassend einen Verdichter (4), einen Wärmespeicher (5) und eine Expansionsturbine (6), wobei der Verdichter (4) austrittsseitig mit dem Eintritt der Expansionsturbine (6) über eine erste Leitung (7) für ein erstes Arbeitsgas (3) verbunden ist, und der Wärmespeicher (5) in eine zweite Leitung (8) geschaltet ist, und wobei die erste Leitung (7) mit einem ersten Wärmetauscher (20) verschaltet ist, mittels welchem die erste Leitung (7) und die zweite Leitung (8) wärmetechnisch gekoppelt sind, und wobei weiterhin ein Entladekreislauf (30) umfasst ist, welcher einen mit einem Dampferzeuger (41) versehenen Wasser-Dampf-Kreislauf (40) umfasst, der mindestens einen dem Dampferzeuger (41) in Bezug auf die Flussrichtung des Wassers in diesem Wasser-Dampf-Kreislauf (40) vorgeschalteten Speisewasservorwärmer (42) aufweist, und wobei eine wärmetechnische Kopplung zwischen Ladekreislauf (2) und Entladekreislauf (30) mittels des Speisewasservorwärmers (42) erreicht ist, insbesondere nur mittels des Speisewasservorwärmers (42) erreicht ist.

## Beschreibung

Die vorliegende Erfindung betrifft eine Energiespeichervorrichtung zur Speicherung thermischer Energie mit einem Ladewie auch Entladekreislauf, welche geeignet ist, Speisewasser in einem Wasser-Dampf-Kreislauf vorzuwärmen. Derartige Energiespeichervorrichtungen werden bevorzugt in Kraftwerke integriert.

Aufgrund der zunehmenden Einspeisung von elektrischer Energie aus erneuerbaren Energiequellen in die Stromverteilungsnetze ergibt sich vermehrt die Notwendigkeit, elektrische Energie zeitlich zwischenspeichern zu können. Ziel ist es hierbei, die elektrische Energie bei einem Überangebot aus den Stromverteilungsnetzen zu entnehmen und für eine zeitlich nachgelagerte Nutzung den Stromverteilungsnetzen erneut zur Verfügung stellen zu können, um so die Verteilungsnetzwerke zu stabilisieren.

Vielfach wird in der technischen Literatur der Ansatz verfolgt, die elektrisch zur Verfügung stehende Energie in thermische Energie umzuwandeln und diese zeitlich zwischen zu speichern. Bei erneuter Nachfrage nach zusätzlicher elektrischer Energie kann die so zwischengespeicherte thermische Energie mittels eines Rückverstromungsverfahrens wieder in elektrische Energie umgesetzt werden.

Ein derartiger technischer Lösungsvorschlag ist etwa in der PCT/EP2012/072450 beschrieben, welche vorschlägt, einen Wärmespeicher mit einem Verdichter sowie einer Expansionsturbine wärmetechnisch zu verschalten, um bei Betrieb des Verdichters die dabei anfallende Kompressionswärme in dem Wärmespeicher einzuführen und zu speichern. Der Wärmespeicher ist hierbei zusätzlich mit einem Wasser-Dampf-Kreislauf verschaltet, so dass die in dem Wärmespeicher befindliche Energie zur Dampfbereitung in dem Wasser-Dampf-Kreislauf vorgesehen werden kann. Ebenfalls kann der Wärmespeicher zur Zwischenüberhitzung von in dem Wasser-Dampf-Kreislauf geführtem Dampf dienen.

Nachteilig an dieser aus dem Stand der Technik bekannten technischen Lösung ist jedoch, dass die Temperatur, welche in dem Wärmespeicher vorherrschen kann zur Dampfbereitung in dem Wasser-Dampf-Kreislauf in einem kraftwerkstypischen Betriebszustand in den meisten Fällen nicht ausreichend hoch ist. Der Wärmespeicher wird nämlich durch einen adiabatischen Wärmeprozess (Kompression eines Arbeitsmediums in dem Verdichter) mit Speicherwärme versorgt. Die hierbei auftretenden Kompressionstemperaturen betragen typischerweise nicht wesentlich mehr als 300°C. Eine Dampfbereitung auf diesem Temperaturniveau erfordert jedoch eine sehr hohe Wärmeübertragungsrate von Wärme aus dem Wärmespeicher auf das Wasser in dem WasserDampf-Kreislauf. Eine effiziente Wärmeübertragung zur Dampfbereitung ist damit jedoch nur ungenügend möglich, da die in dem Wasser-Dampf-Kreislauf geleiteten Wassermengen sehr hoch sind. In anderen Worten ausgedrückt, wird bei einem Temperaturniveau von leidlich 300°C nicht ausreichend Wärme auf das Wasser in den Wasser-Dampf-Kreislauf übertragen, so dass eine Bereitung von Dampf mit ausreichender thermischer Energie ohne weiteres möglich wäre.

Folglich stellt sich als technische Aufgabe, diese aus dem Stand der Technik bekannten Nachteile zu vermeiden. Insbesondere soll eine Energiespeichervorrichtung vorgeschlagen werden, welche erlaubt, thermische Energie, die in einem Wärmespeicher zwischengespeichert ist, effizient einem kraftwerkstechnischen Dampfprozess zur Verfügung zu stellen. Ferner soll die Wärmeübertagung aus den Wärmespeichern an das Wasser in einem solchen Wasser-Dampf-Kreislauf mit einer technisch vorteilhaften Wärmeübertragungsrate erfolgen können. Weiterhin soll die technische Lösung berücksichtigen, dass eine solche Wärmebereitstellung mittels einfacher umbaulicher Maßnahmen auch in herkömmlichen Kraftwerken erreicht werden können soll.

Diese der Erfindung zugrundeliegenden Aufgaben werden durch eine Energiespeichervorrichtung gemäß Anspruch 1 gelöst.

Insbesondere werden diese der Erfindung zugrundeliegenden Aufgaben durch eine Energiespeichervorrichtung zur Speicherung von thermischer Energie gelöst, mit einem Ladekreislauf, umfassend einen Verdichter, einen Wärmespeicher und eine Expansionsturbine, wobei der Verdichter austrittsseitig mit dem Eintritt der Expansionsturbine über eine erste Leitung für ein erstes Arbeitsgas verbunden ist, und der Wärmespeicher in eine zweite Leitung geschaltet ist, und wobei die erste Leitung mit einem ersten Wärmetauscher verschaltet ist, mittels welchem die erste Leitung und die zweite Leitung wärmetechnisch gekoppelt ist und wobei weiterhin ein Entladekreislauf umfasst ist, welcher einen mit einem Dampferzeuger versehenen Wasser-Dampf-Kreislauf umfasst, der mindestens einen dem Dampferzeuger in Bezug auf die Flussrichtung des Wassers in dem Wasser-Dampf-Kreislauf vorgeschalteten Speisewasservorwärmer aufweist, und wobei eine wärmetechnische Kopplung zwischen Ladekreislauf und Entladekreislauf mittels des Speisewasservorwärmers erreicht ist, insbesondere nur mittels des Speisewasservorwärmers erreicht ist.

Der erfindungsgemäße Ladekreislauf kann hierbei sowohl offen als auch geschlossen ausgestaltet sein.

Der Erfindungsgedanke sieht vor, Wärme aus dem Wärmespeicher über einen Speisewasservorwärmer des Entladekreislaufs dem Wasser-Dampf-Kreislauf zuzuführen. Die Nutzung der thermischen Energie dient somit zur thermischen Wasserkonditionierung in dem Wasser-Dampf-Kreislauf bzw. zur Vorwärmung dieses Speisewassers noch vor dem Zuleiten des Wassers an den Dampferzeuger, in welchem das Wasser mit ausreichend Wärme zur Dampferzeugung versorgt werden kann. Der Dampferzeuger gewährleistet hierbei eine ausreichend hohe Wärmeübertragungsrate an das Wasser in dem Wasser-Dampf-Kreislauf, so dass Wasserdampf bei ausreichend hohen Temperaturen und mit ausreichend hoher thermischer Energie erzeugt werden kann. Die thermische Konditionierung durch Übertragung der Wärme aus dem Wärmespeicher mittels der Speisewasservorwärmer dient folglich nur zur Vorwärmung des Wassers, ohne jedoch Wasserdampf zu erzeugen, der in einem Dampfprozess zur Energieerzeugung eingesetzt werden könnte. Die Wasseraufbereitung kann hierbei bei einem Temperaturniveau erfolgen, welches einerseits eine vorteilhafte Übertragung der Wärme aus dem Wärmespeicher zulässt, jedoch andererseits nicht alleinig die Energiequelle für die Dampferzeugung ist. Somit kann dem Speisewasser in dem Wasser-Dampf-Kreislauf in vorteilhafter Weise thermische Energie aus dem Wärmespeicher zugeführt werden, wobei jedoch die Prozesssicherheit und Prozesskonstanz bei der Dampferzeugung durch den Dampferzeuger gewährleistet werden kann. Der Dampferzeuger kann hierbei bspw. ein fossil befeuerter Brennkessel bzw. ein geeigneter Abhitzedampferzeuger etwa einer gekoppelten Gas- und Dampfkraftwerksanlage sein.

An dieser Stelle sei darauf hingewiesen, dass der Speisewasservorwärmer bevorzugt als Wärmetauscher bzw. als eine Anzahl an einzelnen Wärmetauschern ausgeführt ist.

Gemäß einer ersten Ausführungsform der Erfindung ist vorgesehen, dass der Speisewasservorwärmer als Wärmetauscher ausgebildet ist, welcher ebenfalls mit einer Niedertemperatur-Dampfleitung wärmetechnisch gekoppelt ist, die insbesondere von einem Niederdruck-Dampfteil einer mit dem Wasser-Dampf-Kreislauf verschalteten Dampfturbine abgeht. Eine Niedertemperatur-Dampfleitung - im Sinne einer Abzapfdampfleitung einer Niederdruckdampfturbine (Niederdruck-Dampfteil) - kann typischerweise Wasser auf einem Temperaturniveau von etwa 150 °C aufweisen. Somit eignet sich die ausführungsgemäße Kombination zweier Wärmequellen (Wärmespeicher und Niederdruck-Dampfteil) zur Wärmeübertragung an Wasser in den WasserDampf-Kreislauf, um Wärmeenergie auf einem Temperaturniveau von etwa höchstens 150 °C bereit zu stellen.

Gemäß einer weiteren Ausführungsform dieser Erfindung ist vorgesehen, dass der Speisewasservorwärmer als Wärmetauscher ausgebildet ist, welcher ebenfalls mit einer Mitteltemperatur-Dampfleitung wärmetechnisch gekoppelt ist, die insbesondere von einem Mitteldruck-Dampfteil einer mit dem WasserDampf-Kreislauf verschalteten Dampfturbine abgeht. Eine Mitteltemperatur-Dampfleitung - im Sinne einer Abzapfdampfleitung einer Mitteldruckdampfturbine (Mitteldruck-Dampfteil) - kann hierbei ein typisches Temperaturniveau von etwa höchstens 230°C aufweisen. Auch diese Ausführungsform erlaubt eine wärmetechnische Kopplung von Wärme aus dem Dampfprozess sowie Wärme, die aus dem Wärmespeicher entnommen wird.

Gemäß einer weiteren vorteilhaften Ausführungsform der Erfindung ist vorgesehen, dass der Speisewasservorwärmer als Wärmetauscher ausgebildet ist, welcher ebenfalls mit einer Hochtemperatur-Dampfleitung wärmetechnisch gekoppelt ist, die insbesondere von einem Hochdruck-Dampfteil einer mit dem Wasser-Dampf-Kreislauf verschalteten Turbine abgeht. Hochtemperatur-Dampfleitungen - im Sinne von Abzapfdampfleitungen einer Hochdruckdampfturbine (Hochdruck-Dampfteil) - können hierbei ein typisches Temperaturniveau von höchstens bis 350 °C aufweisen. Auch diese Kopplung von Hochtemperatur-Dampfleitung und Wärmespeicher mittels des einen Speisewasservorwärmers erlaubt eine energieeffiziente Wärmenutzung aus zwei verschiedenen Wärmequellen.

An dieser Stelle sei nochmals darauf hingewiesen, dass der Speisewasservorwärmer bevorzugt als Wärmetauscher bzw. als eine Anzahl an einzelnen Wärmetauschern ausgeführt ist. Hierbei eignet sich eine wärmetechnische Kopplung dieser Wärmespeicher mit einer Dampfleitung, die Dampf und damit Wärme aus dem Wasser-Dampf-Kreislauf abführt, besonders zur thermischen Konditionierung im Sinne einer Vorwärmung des Speisewassers. Je nach Temperaturniveau der in dem Wärmespeicher zwischengespeicherten thermischen Energie können so nämlich unterschiedliche Wärmequellen ähnlicher Temperaturniveaus miteinander effizient kombiniert werden, um einen vorteilhaften Gesamtwärmeübertrag auf das Speisewasser zu sichern.

Es bleibt zu berücksichtigten, dass nach zeitlich lang andauernder Zwischenspeicherung von Wärme in dem Wärmespeicher eine Temperaturerniedrigung durch Wärmeverluste erfolgen kann. Dennoch kann auch bei erniedrigten Temperaturniveaus immer noch eine effiziente Wärmeauskopplung, bzw. Kombination verschiedener Wärmequellen auf einem vergleichbaren Temperaturniveau zur Speisewasservorwärmung ermöglicht werden. Ist bspw. ein Wärmespeicher anfänglich vollständig aufgeladen und weist ein Temperaturniveau von etwa 300 °C auf, kann diese Wärme effizient mit Wärme aus einer Hochtemperatur-Dampfleitung mittels eines dafür geeigneten Speisewasservorwärmers kombiniert und auf Speisewasser in dem Wasser-Dampf-Kreislauf übertragen werden. Sollte jedoch aufgrund einer längeren Speicherzeitspanne das Temperaturniveau in dem Wärmespeicher absinken, bspw. auf etwa 150 °C, kann die Wärmeübertragung an das Speisewasser dennoch weiterhin effizient vorgenommen werden, indem etwa die Wärme mit der Wärme einer Niedertemperatur-Dampfleitung kombiniert und auf das Speisewasser übertragen wird.

Entsprechend einer vorteilhaften Ausführungsform der Erfindung ist vorgesehen, dass der Speisewasservorwärmer wenigstens zwei insbesondere genau zwei Wärmetauscher umfasst, die jeweils mit einer Dampfleitung wärmetechnisch verschaltet sind und Wärme auf unterschiedlichen Temperaturniveaus übertragen können. Insbesondere sind diese Dampfleitungen entweder als Niedertemperatur-Dampfleitung, als Mitteltemperatur-Dampfleitung oder als Hochtemperatur-Dampfleitung gemäß der obigen Beschreibung ausgeführt. Aufgrund der Kombination einer Mehrzahl an Speisewasservorwärmern kann die Wärmeübertragung aus dem Wärmespeicher auf das Speisewasser in dem Wasser-Dampf-Kreislauf thermisch flexibilisiert werden. Insbesondere kann dadurch auch dem Temperaturniveau des Wärmespeichers Rechnung getragen werden, welches sich im Laufe der Zwischenspeicherung von Wärme verändern kann.

Gemäß einer weiteren vorteilhaften Ausführungsform der Erfindung ist vorgesehen, dass der Verdichter und die Expansionsturbine auf einer gemeinsamen Welle angeordnet sind. Alternativ kann jedoch der Verdichter und die Expansionsturbine auch voneinander mechanisch entkoppelt angeordnet sein.

Weiterhin ist es denkbar, dass der Verdichter und die Expansionsturbine über einen im Wesentlichen geschlossenen Leitungskreislauf für das erste Arbeitsgas, welcher die erste Leitung umfasst, verschaltet sind. Ein solcher geschlossener Leitungskreislauf umfasst etwa die erste Leitung, welche durch den Verdichter verdichtetes Arbeitsgas an die Expansionsturbine führt, sowie eine Rückführleitung, welche das expandierte Arbeitsgas wieder an den Verdichter zurückleitet. Entsprechend einer besonderen Ausführungsform können die erste Leitung und die Rückführleitung über einen weiteren zweiten Wärmetauscher miteinander gekoppelt sein, so dass etwa nicht in den Wärmespeicher eingespeicherte thermische Energie noch auf das in den Verdichter eingeführte Arbeitsgas wenigstens zum Teil übertragen werden kann. Ein im Wesentlichen geschlossener Leitungskreislauf ermöglicht die Verwendung eines Arbeitsgases, welches insbesondere nicht Luft ist, welches jedoch besonders wirtschaftliche thermodynamische Zustandsänderungen ermöglicht.

Gemäß einer weiteren vorteilhaften Ausführungsform der Erfindung ist vorgesehen, dass die erste Leitung eine elektrisch betriebene Heizvorrichtung umfasst. Mittels dieser Heizung kann elektrische Energie zur geeigneten thermischen Konditionierung in die erste Leitung eingeführt werden. So kann bspw. bei Angebot von Überschussstrom diese elektrisch betriebene Heizvorrichtung zusätzliche thermische Energie bereitstellen, welche etwa in dem Wärmespeicher zwischengespeichert werden kann. Ebenso kann die elektrisch betriebene Heizvorrichtung auch gewährleisten, dass das in die Expansionsturbine eingeführte Arbeitsgas ein ausreichend hohes Temperaturniveau aufweist, damit während des Entspannungsprozesses in bzw. nach der Expansionsturbine keine Kälteschäden zu befürchten stehen.

Alternativ oder auch zusätzlich kann in den Ladekreislauf stromaufwärts vor den Wärmespeicher eine elektrische Zusatzheizung geschaltet sein. Auch eine solche Zusatzheizung ermöglicht die Bereitstellung von zusätzlicher thermischer Energie, die in dem Wärmespeicher zwischengespeichert werden kann. Eine solche Bereitstellung ist insbesondere dann energetisch vorteilhaft, wenn etwa elektrische Energie bei Angebot von Überschussstrom aus den öffentlichen Verteilungsnetzwerken entnommen und genutzt werden kann.

Gemäß einer weiteren bevorzugten Ausführungsform der Erfindung ist vorgesehen, dass der Wärmespeicher ein poröses Speichermedium enthält, das Sand, Kies, Gestein, Beton, Wasser, Salz und/oder Thermoöl umfasst. Im Grunde eignet sich für den Wärmespeicher folglich jedes geeignete Material zur sensiblen wie auch latenten Wärmespeicherung. Ebenso ist es denkbar, den Wärmespeicher als thermochemischen Wärmespeicher auszuführen.

Gemäß einer weiteren besonders bevorzugten Ausführungsform ist vorgesehen, dass in den Entladekreislauf weiterhin eine mit Dampf aus dem Wasser-Dampf-Kreislauf betreibbare Dampfturbinenanlage geschaltet ist. Diese Dampfturbinenanlage gewährleistet die Rückverstromung von thermischer Energie zur Bereitstellung von elektrischer Energie und befindet sich in zahlreichen bereits installierten Kraftwerksanlagen. Folglich kann durch einfache bautechnische Änderungen eine bereits bestehende Kraftwerksanlage soweit umgerüstet werden, um auch Wärme aus dem Wärmespeicher zur thermischen Konditionierung von Speisewasser geeignet nutzen zu können.

Nachfolgend soll die Erfindung anhand einer Zeichnung im Detail näher erklärt werden. Hierbei sei darauf hingewiesen, dass die Zeichnung lediglich schematisch ausgeführt ist, jedoch damit keine Einschränkung hinsichtlich der Ausführbarkeit der Erfindung abgeleitet werden können.

Ebenso sei darauf hingewiesen, dass die in der Zeichnung gezeigten technischen Komponenten alleine für sich und in jeder Kombination miteinander beansprucht werden, soweit durch die Kombination eine Lösung des der Erfindung zugrunde liegenden technischen Problems erreicht werden kann.

Weiterhin sei darauf hinzuweisen, dass die in der Figur mit gleichen Bezugszeichen versehenen Bauteile gleiche Wirkungen aufweisen.

Hierbei zeigt:

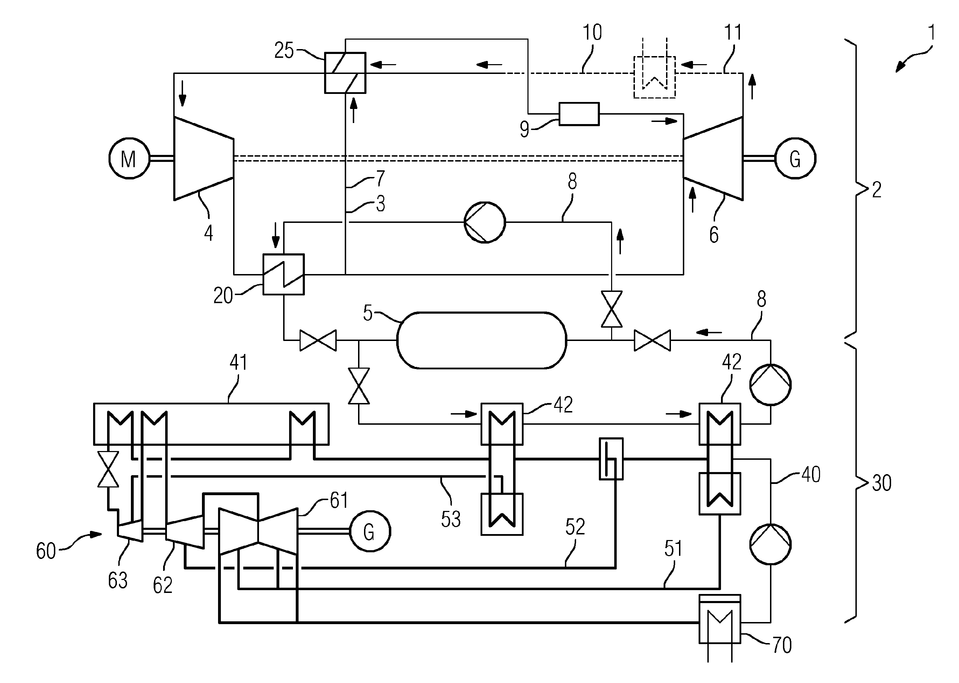

- Figur 1: eine schematische Schaltansicht einer ersten Ausführungsform der erfindungsgemäßen Energiespeichervorrichtung 1.

Figur 1 zeigt eine Ausführungsform der erfindungsgemäßen Energiespeichervorrichtung 1 zur Speicherung von thermischer Energie. Die Energiespeichervorrichtung 1 weist einen Ladekreislauf 2 sowie einen Entladekreislauf 30 auf. Der Ladekreislauf 2 umfasst einen Verdichter 4, der mit einem Motor M über eine mechanische Welle gekoppelt ist. Weiter weist der Ladekreislauf 2 eine Expansionsturbine 6 auf, die mit einem Generator G zur elektrischen Energieerzeugung mechanisch gekoppelt ist. Verdichter 4 und Expansionsturbine 6 sind über eine erste Leitung 7 für ein erstes Arbeitsgas 3 miteinander fluidtechnisch verbunden. In die erste Leitung 7 ist zudem ein erster Wärmetauscher 20 geschaltet, welcher ermöglicht, Wärme aus der ersten Leitung 7 an einen Wärmespeicher 5 zu übertragen. Hierbei ist der erste Wärmetauscher 20 primärseitig mit der ersten Leitung 7 und sekundärseitig mit der zweiten Leitung 8 verschaltet.

Wird nun bei regulärem Betrieb der Verdichter 4 mittels dem Motor M angetrieben, wird das in den Verdichter 4 angesaugte erste Arbeitsgas 3 verdichtet, wodurch bei adiabatischer Verdichtung dem Arbeitsgas 3 thermische Energie übertragen wird. Diese thermische Energie, welche bei einem Temperaturniveau von etwa höchstens 300 °C bis 350 °C bereitgestellt werden kann, wird über den ersten Wärmetauscher 20 auf ein nicht weiter mit Bezugszeichen versehenes zweites Arbeitsgas in der zweiten Leitung 8 übertragen. Das zweite Arbeitsgas kann hierbei identisch mit dem ersten Arbeitsgas 3 sein. Aufgrund der Zirkulation des zweiten Arbeitsgases in der zweiten Leitung 8 wird zunehmend thermische Energie in dem Wärmespeicher 5 geleitet und dort deponiert.

Nach thermischer Wechselwirkung des ersten Arbeitsgases 3 im Bereich des ersten Wärmespeichers 20 wird das erste Arbeitsgas der Expansionsturbine 6 in der ersten Leitung 7 zugeleitet. Hierbei kann das erste Arbeitsgas 3 mittels einer elektrischen Heizvorrichtung 9 vor Eintritt in die Expansionsturbine 6 noch weiter thermisch konditioniert werden. Bei Entspannung des ersten Arbeitsgases 3 in der Expansionsturbine 6 erfolgt die Entspannung des Gases auf ein geringeres Druckniveau. Mit der dabei frei werdenden druckdynamischen Energie, die in Bewegungsenergie umgesetzt wird, kann die Expansionsturbine 6 betrieben und in Folge mittels dem Generator G elektrische Energie erzeugt werden.

Nach Austritt aus der Expansionsturbine 6 kann das erste Arbeitsgas 3 entweder im Sinne eines offenen Kreislaufes der Umgebung zugeführt werden oder aber, wenn ein geschlossener Kreislauf verwirklicht ist, wieder erneut über eine Rückführleitung 11 dem Verdichter 4 zugeleitet werden. Im Falle einer geschlossenen Leitungsführung kann so bspw. das in der Rückführleitung 11 geführte erste Arbeitsgas 3 wiederum über einen zweiten Wärmetauscher 25 thermisch konditioniert werden, der erlaubt, Wärme aus dem ersten Arbeitsgas 3 nach Wärmeübertragung in dem ersten Wärmetauscher 20 und noch vor Zuführung an die Expansionsturbine 6 zu entnehmen, um diese auf das rückgeführte erste Arbeitsgas 3 noch vor Zuführen an den Verdichter 4 zu übertragen. Der zweite Wärmetauscher 25 ist primärseitig in die erste Leitung 7 und sekundärseitig in die Rückführleitung 11 geschaltet.

Der Entladekreislauf 30 weist einen Wasser-Dampf-Kreislauf 40 auf, welcher mit einer Dampfturbine 60 verschaltet ist. Die Dampfturbine 60 weist drei verschiedene Dampfteile auf, die sich je nach Temperatur- und Druckniveau des Wasserdampfes in dem Wasser-Dampf-Kreislauf 40 unterscheiden. So sieht die Dampfturbine 60 ausführungsgemäß ein Niederdruck-Dampfteil 61 (Niederdruckdampfturbine), ein Mitteldruck-Dampfteil 62 (Mitteldruckdampfturbine) sowie ein Hochdruck-Dampfteil 63 (Hochdruckdampfturbine) vor. Zur Dampfbereitung umfasst der Entladekreislauf 30 einen Dampferzeuger 41, bspw. einen fossil befeuerten Dampferzeuger (fossil befeuerter Brennerraum bzw. Abhitzedampferzeuger). Weiter weist der Entladekreislauf 30 stromaufwärts von diesem Dampferzeuger 41 zwei Speisewasservorwärmer 42 auf, die jeweils über die zweite Leitung 8 mit dem Wärmespeicher 5 wärmetechnisch verschaltet sind. Gleichzeitig sind die Speisewasservorwärmer 42 ebenfalls wärmetechnisch mit Dampfleitungen einzelner Dampfteile der Dampfturbine 60 verbunden. So ist bspw. der erste nach dem Kondensator 70 angeordnete Speisewasservorwärmer 42 mit dem Niederdruck-Dampfteil 61 der Dampfturbine 60 über eine Niedertemperatur-Dampfleitung 51 verbunden. Die Niedertemperatur-Dampfleitung 51 erlaubt die Zuführung von Abzapfdampf aus dem Niederdruck-Dampfteil 61 an den Speisewasservorwärmer 42. Diesem Speisewasservorwärmer 42 stromabwärts nachgeordnet ist ein weiterer Vorwärmer, der vorliegend nicht mit Bezugszeichen versehen ist. Dieser Vorwärmer ist ausschließlich mit einer Mitteltemperatur-Dampfleitung 52 aus dem Mitteldruck-Dampfteil 62 der Dampfturbine 60 verschaltet. Diesem Vorwärmer stromabwärts nachgeschaltet ist weiter ein zweiter Speisewasservorwärmer 42, der gleichzeitig mit einer Hochtemperatur-Dampfleitung 53 mit dem Hochdruck-Dampfteil 63 der Dampfturbine 60 verschaltet ist.

Bei Entnahme von Wärme aus dem Wärmespeicher 5 kann nun in einer zweiten Leitung 8 das zweite Arbeitsgas derart geleitet werden, dass es zunächst aus dem Wärmespeicher 5 Wärme entnimmt und diese dann den beiden Speisewasservorwärmern 42 zuleitet. Die Speisewasservorwärmer 42 ermöglichen die Wärmeübertragung von dem zweiten Arbeitsgas in der zweiten Leitung 8 auf Speisewasser in dem Wasser-Dampf-Kreislauf 40. Je nach vorherrschenden Temperaturniveaus können die Speisewasservorwärmer 42 auch thermische Energie aus den Dampfleitungen 51 und 53 entnehmen. Hierbei wird also die Wärme aus dem Wärmespeicher 5 zusammen mit Wärme, die an vorbestimmten Stellen in dem Wasser-Dampf-Kreislauf 40 entnommen wird, kombiniert.

Ausführungsgemäß weist das aus dem Kondensator 70 entnommene Wasser etwa ein Temperaturniveau von 20 °C auf. Weist das in dem Wärmespeicher 5 angeordnete Speichermedium selbst ein Temperaturniveau von etwa 300 °C auf, kann bspw. mittels des ersten Speisewasservorwärmers 42 stromabwärts nach dem Kondensator 70 ein Temperaturniveau von 150 °C vorgegeben werden. Das Speisewasser wird nach erneuter Vorwärmung mittels des nicht weiter mit Bezugszeichen versehenen Vorwärmers auf ein Temperaturniveau von 200 °C aufgeheizt. Der weitere darauf stromabwärts folgende Speisewasservorwärmer 42 ermöglicht dann bspw. eine thermische Konditionierung auf ein Temperaturniveau von etwa 300 °C. Nach diesen Schritten der thermischen Konditionierung des Speisewassers wird dieses in den Dampferzeuger 41 zur weiteren thermischen Dampfbereitung geführt. Daran anschließend kann der Rückverstromungsprozess mittels der Dampfturbine 60 unter Nutzung des in dem WasserDampf-Kreislauf 40 befindlichen Dampfes vollzogen werden.

Weitere Ausführungsformen ergeben sich aus den Unteransprüchen.

## Patentansprüche

1. Energiespeichervorrichtung (1) zur Speicherung thermischer Energie, mit einem Ladekreislauf (2), umfassend einen Verdichter (4), einen Wärmespeicher (5) und eine Expansionsturbine (6), wobei der Verdichter (4) austrittsseitig mit dem Eintritt der Expansionsturbine (6) über eine erste Leitung (7) für ein erstes Arbeitsgas (3) verbunden ist, und der Wärmespeicher (5) in eine zweite Leitung (8) geschaltet ist, und wobei die erste Leitung (7) mit einem ersten Wärmetauscher (20) verschaltet ist, mittels welchem die erste Leitung (7) und die zweite Leitung (8) wärmetechnisch gekoppelt sind, und
wobei
weiterhin ein Entladekreislauf (30) umfasst ist, welcher einen mit einem Dampferzeuger (41) versehenen Wasser-Dampf-Kreislauf (40) umfasst, der mindestens einen dem Dampferzeuger (41) in Bezug auf die Flussrichtung des Wassers in diesem Wasser-Dampf-Kreislauf (40) vorgeschalteten Speisewasservorwärmer (42) aufweist, und wobei eine wärmetechnische Kopplung zwischen Ladekreislauf (2) und Entladekreislauf (30) mittels des Speisewasservorwärmers (42) erreicht ist, insbesondere nur mittels des Speisewasservorwärmers (42) erreicht ist.

2. Energiespeichervorrichtung (1) nach Anspruch 1,
**dadurch gekennzeichnet, dass** der Speisewasservorwärmer (42) als Wärmetauscher ausgebildet ist, welcher ebenfalls mit einer Niedertemperatur-Dampfleitung (51) wärmetechnisch gekoppelt ist, die insbesondere von einem Niederdruck-Dampfteil (61) einer mit dem Wasser-Dampf-Kreislauf (40) verschalteten Dampfturbine (60) abgeht.

3. Energiespeichervorrichtung (1) nach einem der vorhergehenden Ansprüche,
**dadurch gekennzeichnet, dass** der Speisewasservorwärmer (42) als Wärmetauscher ausgebildet ist, welcher ebenfalls mit einer Mitteltemperatur-Dampfleitung (52) wärmetechnisch gekoppelt ist, die insbesondere von einem Mitteldruck-Dampfteil (62) einer mit dem Wasser-Dampf-Kreislauf (40) verschalteten Dampfturbine (60) abgeht.

4. Energiespeichervorrichtung (1) nach einem der vorhergehenden Ansprüche,
**dadurch gekennzeichnet, dass**
der Speisewasservorwärmer (42) als Wärmetauscher ausgebildet ist, welcher ebenfalls mit einer Hochtemperatur-Dampfleitung (53) wärmetechnisch gekoppelt ist, die insbesondere von einem Hochdruck-Dampfteil (63) einer mit dem Wasser-Dampf-Kreislauf (40) verschalteten Dampfturbine (60) abgeht.

5. Energiespeichervorrichtung (1) nach einem der vorhergehenden Ansprüche,
**dadurch gekennzeichnet, dass**
der Speisewasservorwärmer (42) wenigstens zwei, insbesondere genau zwei Wärmetauscher umfasst, die jeweils mit einer Dampfleitung wärmetechnisch verschaltet sind, die Wärme auf einem unterschiedlichen Temperaturniveau übertragen kann.

6. Energiespeichervorrichtung (1) nach einem der vorhergehenden Ansprüche,
**dadurch gekennzeichnet, dass**
der Verdichter (4) und die Expansionsturbine (6) auf einer gemeinsamen Welle (14) angeordnet sind.

7. Energiespeichervorrichtung (1) nach einem der vorhergehenden Ansprüche,
**dadurch gekennzeichnet, dass**
der Verdichter (4) und die Expansionsturbine (6) voneinander mechanisch entkoppelt angeordnet sind.

8. Energiespeichervorrichtung (1) nach einem der vorhergehenden Ansprüche,
**dadurch gekennzeichnet, dass**
der Verdichter (4) und die Expansionsturbine (6) über einen im Wesentlichen geschlossenen Leitungskreislauf (10) für das erste Arbeitsgas (3), welcher die erste Leitung (7) umfasst, verschaltet sind.

9. Energiespeichervorrichtung (1) nach einem der vorhergehenden Ansprüche,
**dadurch gekennzeichnet, dass**
die erste Leitung (7) eine elektrisch betriebene Heizvorrichtung (9) umfasst.

10. Energiespeichervorrichtung (1) nach einem der vorhergehenden Ansprüche,
**dadurch gekennzeichnet, dass**
in den Ladekreislauf (2) stromaufwärts vor dem Wärmespeicher (5) eine elektrische Zusatzheizung geschaltet ist.

11. Energiespeichervorrichtung (1) nach einem der vorhergehenden Ansprüche,
**dadurch gekennzeichnet, dass**
dass der Wärmespeicher (5) ein poröses Speichermedium enthält, das Sand, Kies, Gestein, Beton, Wasser, Salz und/oder Thermoöl umfasst.

12. Energiespeichervorrichtung (1) nach einem der vorhergehenden Ansprüche,
**dadurch gekennzeichnet, dass**
in den Endladekreislauf (30), weiterhin eine mit Dampf aus dem Wasser-Dampf-Kreislauf (40) betreibbare Dampfturbinenanlage (43) geschaltet ist.
